Europäisches Patentamt

European Patent Office

Office européen des brevets

(11) Veröffentlichungsnummer: **0 475 072 A1**

## EUROPÄISCHE PATENTANMELDUNG

(21) Anmeldenummer: **91113206.6**

(22) Anmeldetag: **06.08.91**

(51) Int. Cl.5: **D01H 5/22**, F16C 33/20

(30) Priorität: **21.08.90 CH 2701/90**

(43) Veröffentlichungstag der Anmeldung:
**18.03.92 Patentblatt 92/12**

(84) Benannte Vertragsstaaten:
**CH DE FR GB IT LI**

(71) Anmelder: **MASCHINENFABRIK RIETER AG**

**CH-8406 Winterthur(CH)**

(72) Erfinder: **Oehy, Peter**
**Florenstrasse 35**
**CH-8405 Winterthur(CH)**
Erfinder: **Wildberger, Heinz**
**Schlosshofstrasse 54**
**CH-8400 Winterthur(CH)**

(54) **Textilmaschine mit einer Einrichtung zum Verstrecken von faserförmigem Material.**

(57) In einer Textilmaschine mit einer Einrichtung zum Verstrecken von faserförmigem Material, insbesondere einer Ringspinnmaschine, ist ein Unterwalzenstrang (20) in Lagerungen (1) abgestützt, welche eine Lagerschale (10) aus Kunststoff aufweisen. Die Lagerschale (10) ist in axialer Richtung und in Umfangsrichtung durch einen Vorsprung (100) bzw. ein Stützteil (101) gegen Verschiebung bzw. Verdrehung gesichert. Die Lagerschale (10) weist mindestens eine Freistellung (102) bzw. eine Nut (214) zur Abfuhr von Verunreinigungen auf. Die Verwendung von Kunststoff als Lagermaterial in der Lagerung (1) ermöglicht eine einfache und preiswerte Montage des Unterwalzenstranges (20), wobei auf eine Schmierung der Lagerung (1) weitgehend verzichtet werden kann.

Fig. 1

Rank Xerox (UK) Business Services

EP 0 475 072 A1

Die Erfindung betrifft eine Textilmaschine nach dem Oberbegriff des Anspruches 1.

Es ist üblich, Unterwalzenstränge solcher Textilmaschinen in Wälzlagern abzustützen, da die Unterwalzenstränge mit niedriger Drehzahl und unter starken Anpresskräften durch Anpressrollen laufen, wodurch die Anwendung von hydrodynamisch geschmierten Gleitlagern von vornherein ausgeschlossen ist. Es war auch die Verwendung von Gleitlagern mit Fettschmierung oder von Kunststofflagern auf Grund der ungünstigen Bedingungen nicht möglich. Die Verwendung von Wälzlagern in den Lagerungen von Unterwalzensträngen macht ein gelegentliches Schmieren der Lagerstellen notwendig, wobei seitliches Austreten des Schmierstoffes in den Bereich neben den Lagerungen nicht vermieden werden kann. Dort kann sich an der mit Schmierstoff behafteten Oberfläche des Unterwalzenstranges Flug ansammeln, der gelegentliches Reinigen der betroffenen Teile der Unterwalzenstränge notwendig macht.

Es ist Aufgabe der vorliegenden Erfindung, eine Textilmaschine zu schaffen, in der die Lagerung der Verstreckungseinrichtung vereinfacht wird, wobei gleichzeitig weniger Anforderungen an den Unterhalt der Lagerungen gestellt werden.

Diese Aufgabe wird erfindungsgemäss durch die Lehre gemäss den Patentansprüchen gelöst. Die Unteransprüche betreffen vorteilhafte Ausbildungen der Erfindung. Die Verwendung von Kunststoff zur Lagerung von Unterwalzensträngen wurde erst mit der Entwicklung hochfester Materialien möglich.

Als Lagerwerkstoff kommen beispielsweise Polyamid oder ein hochfestes Polyimid (Produktname Vespel von Du Pont) in Frage.

Versuche haben gezeigt, dass die Lagerung praktisch ohne Nachschmierung betrieben werden kann, wodurch Verunreinigungen der der Lagerstelle benachbarten Partien der Unterwalzenstränge durch Schmierstoff und diesem anhaftenden Flug vermieden werden können. Dadurch entfällt einerseits ein Nachschmieren der Lagerstellen, andererseits die gelegentliche Reinigung der Partien der Unterwalzenstränge neben den Lagerstellen. Zudem gestaltet sich die Erstmontage eines Unterwalzenstranges sowie der Aus- und Einbau bei einer Revision der Maschine durch die Ausführung gemäss der Erfindung einfacher als bei der Verwendung von Wälzlagern in der Lagerungen der Unterwalzenstränge.

Im folgenden wird die Erfindung anhand der Figuren im einzelnen beschrieben. Es zeigen:

Fig. 1   eine perspektivische Explosionszeichnung einer Lagerstelle,

Fig. 2   einen Meridianschnitt durch einen Unterwalzenstrang und gleichzeitig eine Seitenansicht der Lagerung in Richtung des Pfeiles II in Fig. 3, und

Fig. 3   einen Querschnitt durch den Unterwalzenstrang und eine Ansicht der Lagerung in Achsrichtung des Unterwalzenstranges.

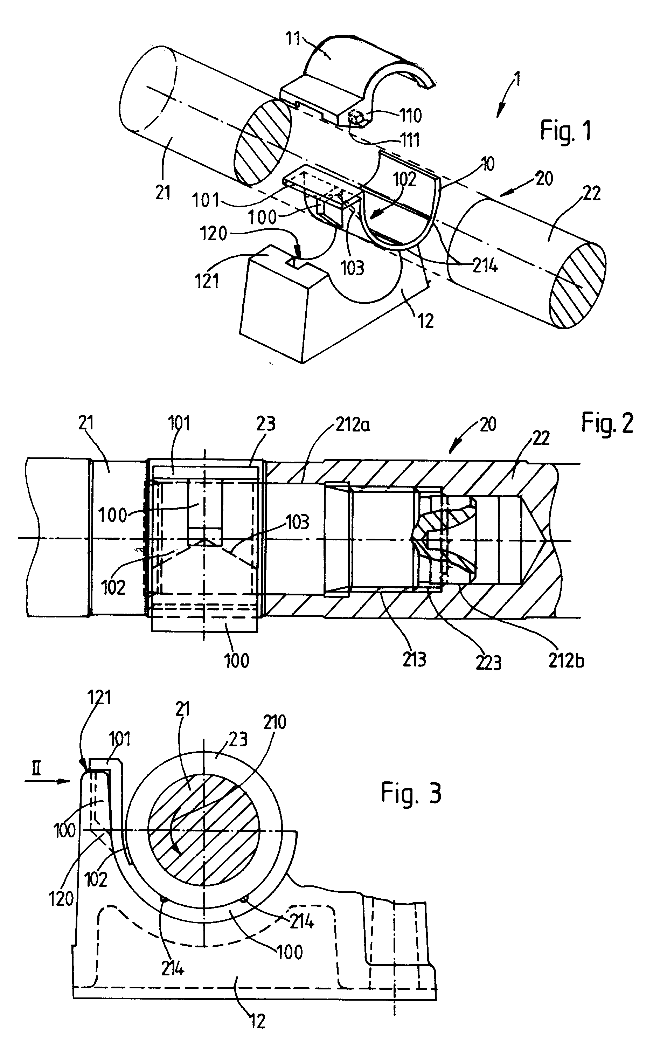

Der sich in Richtung des Pfeils 210 drehende Unterwalzenstrang 20 besteht aus mindestens zwei Teilen, nämlich dem Walzenteil 21 und dem Walzenteil 22, wobei das Walzenteil 21 gemäss Fig. 2 ein Aussengewinde 213 und das Walzenteil 22 ein Innengewinde 223 aufweist. Den Gewinden 213 und 223 sind jeweils zwei Zentrierungen 212a,212b benachbart, wobei jeweils ein kalibrierter Zapfen des Walzenteils 21 in einer kalibrierten Bohrung des Walzenteils 22 liegt. An der Stelle der Lagerung 1 befindet sich eine Büchse 23 auf dem Walzenteil 21, die in einer Lagerschale 10 aus hochfestem Kunststoff liegt. Die Lagerschale 10 kann wie in den Figuren gezeigt den Unterwalzenstrang 20 um den halben Umfang umschliessen. Es ist aber auch möglich, die Lagerschale 10 ganz oder beinahe vollständig geschlossen auszuführen. Wenn die Lagerschale 10 einen Teil des Unterwalzenstranges 20 in der Lagerung 1 frei lässt, ist es zweckmässig, einen Lagerdeckel 11 anzuordnen, der beispielsweise mittels Vorsprüngen 111 an seitlichen Wangen 110 des Lagerdeckels, welche ein Stützteil 101 der Lagerschale 10 untergreifen, gegen unbeabsichtigtes Verschieben gesichert sein kann. Die Lagerschale 10 ihrerseits kann durch das Stützteil 101 und einen Vorsprung 100 gegen Verdrehen bzw. Verschieben in axialer Richtung gesichert sein, wobei das Stützteil 101 auf einer Stützfläche 121 eines Lagersupports 12 für die Lagerschale 10 aufliegt und der Vorsprung 100 der Lagerschale 10 in eine Aussparung 120 des Lagersupportes greift. Zur Abführung von Verunreinigungen kann auf der Einlaufseite des Unterwalzenstranges 20 in der Lagerschale 10 eine Freistellung 102 sein, die so ausgeführt ist, dass einlaufseitig des Unterwalzenstranges 20 eine dachförmige Kontur 103 in der Lagerschale 10 entsteht, die das Austreten von Verunreinigungen in axialer Richtung ermöglicht. Weiterhin können Nuten 214 im wesentlichen in axialer Richtung in der Lagerschale eingearbeitet sein, die ebenfalls das Austreten von Verunreinigungen ermöglichen. Diese Nuten 214 können auch bei der Erstmontage der Lagerschale 10 mit Schmierfett gefüllt sein, das nach und nach verbraucht wird.

**Patentansprüche**

1.   Textilmaschine mit einer Einrichtung zum Verstrecken von faserförmigem Material, insbesondere Ringspinnmaschine mit einem Streckwerk, in dem ein Unterwalzenstrang gelagert ist, dadurch gekennzeichnet, dass der Unterwalzenstrang (20) mindestens eine Lagerung (1) aufweist, in der der Unterwalzenstrang (20) von einer Lagerschale (10) aus hochfestem Kunststoff getragen wird.

2. Textilmaschine nach Anspruch 1, dadurch gekennzeichnet, dass die Lagerschale (10) den Unterwalzenstrang (20) im wesentlichen um den halben Umfang umschliesst.

3. Textilmaschine nach Anspruch 1, dadurch gekennzeichnet, dass die Lagerschale im wesentlichen kreisförmig geschlossen ist und somit den Unterwalzenstrang (20) am ganzen Umfang umschliesst.

4. Textilmaschine nach Anspruch 1, dadurch gekennzeichnet, dass die Lagerschale (10) von einem Lagersupport (12) der Textilmaschine getragen wird, wobei ein sich vom Umfang des Unterwalzenstranges (20) weg erstreckendes flächiges Stützteil (101) der Lagerschale (10) sich auf einer Stützfläche (121) des Lagersupports (12) abstützt, so dass die Lagerschale (10) in Drehrichtung (210) des Unterwalzenstrangs gesichert ist.

5. Textilmaschine nach Anspruch 1, dadurch gekennzeichnet, dass ein Vorsprung (100) am Aussenumfang der Lagerschale (10) im montierten Zustand der Lagerschale in eine Aussparung (120) des Lagersupports (12) eingreift, so dass die Lagerschale (10) in axialer Richtung des Unterwalzenstranges (20) gesichert ist.

6. Textilmaschine nach Anspruch 4, dadurch gekennzeichnet, dass oberhalb des Lagersupportes (12) ein Lagerdeckel (11) angeordnet ist, der den im Bereich der Lagerschale (10) befindlichen Teil des Unterwalzenstranges (20) vor Verunreinigungen und Beschädigungen schützt, wobei sich der Lagerdeckel (11) über den von der Lagerschale (10) nicht abgedeckten Bereich des Unterwalzenstranges (20) erstreckt.

7. Textilmaschine nach Anspruch 4 und 6, dadurch gekennzeichnet, dass eine Wange (110) am Lagerdeckel (11) aussen um das Stützteil (101) greift, wobei ein auf die Innenseite der Wange (110) gerichteter Vorsprung (111) das Stützteil (101) untergreift, so dass der Lagerdeckel (11) gegenüber der Lagerschale (10) gesichert ist.

8. Textilmaschine nach Anspruch 1, dadurch gekennzeichnet, dass die Lagerschale (10) im wesentlichen in Längsrichtung des Unterwalzenstranges (20) verlaufende Nuten (214) zum Abführen von Verunreinigungen aufweist.

9. Textilmaschine nach Anspruch 1, dadurch gekennzeichnet, dass im Einlaufbereich des Unterwalzenstranges (20) in der Lagerschale (10) eine Freistellung (102) so ausgeführt ist, dass in der Lagerschale (10) eine dachförmige Randkontur (103) entsteht, welche die Abfuhr von in die Freistellung (102) eingedrungenen Verunreinigungen in axialer Richtung zu beiden Seiten der Lagerschale (10) ermöglicht.

10. Textilmaschine nach Anspruch 1, dadurch gekennzeichnet, dass der Unterwalzenstrang (20) aus einzelnen Walzenteilen (21,22) zusammengesteckt und verschraubt ist, wobei jeweils in der Lagerung (1) des Unterwalzenstranges (20) eine Büchse (23) auf dem Unterwalzenstrang (20) sitzt, welche mit einem Teil ihres Umfanges auf der Innenseite der Lagerschale (10) aufliegt.

Fig. 1

Fig. 2

Fig. 3

**Europäisches Patentamt**

# EUROPÄISCHER RECHERCHENBERICHT

Nummer der Anmeldung

## EP 91 11 3206

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-1 610 116 (SIEMENS-ELEKTROGERÄTE GMBH) – – – | 1,2 | D 01 H 5/22<br>F 16 C 33/20 |
| A | DE-A-1 610 116 (* Seite 2, Zeile 5 - Zeile 18; Abbildung 1 * ) * Seite 5, Zeile 8 - Zeile 23 * * – – – | 3-10 | |
| A | DE-U-1 914 518 (INDUSTRIEWERK SCHAEFFLER OHG) * das ganze Dokument * * – – – | 1 | |
| A | GB-A-2 125 490 (GLYCO-METALL-WERKE DAELE & LOOS GMBH) – – – | 1,4,5 | |
| A | FR-A-1 471 846 (KARL SCHMIDT GMBH) * Ansprüche * * – – – | 1,8,9 | |
| A | AU-B-584 799 (GORDON JOSEPH TAYLOR) * Seite 5, Zeile 4 - Zeile 25; Abbildung 2 * * * Seite 7, Zeile 5 - Zeile 17 * * – – – – – | 1 | |

**RECHERCHIERTE SACHGEBIETE (Int. Cl.5)**

D 01 H
F 16 C

Der vorliegende Recherchenbericht wurde für alle Patentansprüche erstellt

| Recherchenort | Abschlußdatum der Recherche | Prüfer |
|---|---|---|
| Den Haag | 03 Dezember 91 | TAMME H.-M.N. |